# EUROPEAN PATENT APPLICATION

(11) **EP 3 587 179 A1**
(43) Date of publication of application: **01.01.2020**
(21) Application number: 19182704.7
(22) Date of filing: 26.06.2019
(51) Int. Cl.: B60P 3/10, B66C 19/00

(54) **SELF-PROPELLED MACHINE FOR THE TRANSPORT AND PRECISION ASSEMBLY OF BULKY ITEMS**

(30) Priority: 28.06.2018 IT 201800006789
(71) Applicant: Boat Lift S.r.L., 12055 Diano d'Alba (CN) (IT)
(72) Inventor: CARDONE, Alex, 12055 DIANO D'ALBA (CN) (IT); PIRA, Ezio, 12055 DIANO D'ALBA (CN) (IT)
(74) Representative: Robba, Pierpaolo

(57) **Abstract**

Self-propelled machine (11) for the transport and precision assembly of bulky items, comprising: a chassis structure (13), in which a chassis lower portion (15) and a chassis upper (17) are defined, both said portions being substantially U-shaped, the lower portion (15) being supported by motor-driven steering carriages (19) having each a pair of motor-driven wheels (21), said structure further defining a pair of parallel lateral frames (29) that are separated from each other by a central compartment (31) adapted to receive an item to be transported, said compartment being inferiorly, superiorly and frontally open in order to allow an item to be transported to enter said compartment, and laterally delimited by the lateral frames (29) of the chassis structure; a pair of support bands (33) transversely crossing said compartment (31) and associated to tensioning assemblies (35) controlled by an electronic control unit and connected to the chassis structure (13), said tensioning assemblies being adapted to tension and release said bands (33); a plurality of lateral (37) and rear (39) stabilizers associated to the chassis structure (13) and driven by driving assemblies, said stabilizers being adapted to continuously assume a retracted or rest configuration and an advanced, supporting configuration conferring stabilization to the item transported within the compartment (31); a programmable electronic control unit; at least one sensor capable of generating an electric signal in which at least one parameter is a function of the position of the machine (11) and, consequently, of the transported item relative to a reference stationary with respect to the pavement on which the machine (11) is working; a power unit feeding - through a control assembly controlled by the control unit - the tensioning assemblies (35), the driving assemblies and the motors of the wheels.

## Description

### Technical Field

The present invention relates to a self-propelled machine for the transport and precision positioning of bulky items. More specifically, though not exclusively, the invention relates to a self-propelled machine adapted for use in the industrial field for transporting, usually over short distances within industrial facilities, bulky and heavy items, from a first pick-up area to a second target area, in which the transported items must be precisely arranged relative to a fixed structure. A typical example of use of the machine according to the invention concerns the transport and precision assembly of door leafs of industrial facilities, for example of power production plants based on nuclear reactors.

### Prior Art

At present, the transport of items and machinery of various kinds within industrial facilities is effected by using vehicles of different kinds, depending on the kind of items to be transported. Known vehicles suitable for this purpose are, for example, manual lift trucks or "transpallets", motorized lift trucks or "fork-lifts", and overhead travelling cranes. In the nautical field, though not exclusively therein, special carts for hauling and launching boats, known as "travel-lifts" are also used. A cart for nautical applications is disclosed, for example, in WO2018042277 (A1) in the name of the applicant.

In some applications, the precision positioning of the transported items is not a priority. Very often, in fact, the transported items can be positioned at will or with a tolerance of the order of hundreds or at most tens of centimeters. In these applications, where high precision is not required, the known carts and vehicles can be used without particular drawbacks. However, when the item to be transported has a large size and at the same time it is necessary to position the item with high precision, of the order of a few tenths of a millimeter, the known carts and vehicles are unsuitable and therefore it is necessary to operate manually and/or with handcrafted solutions.

One of the problems encountered in the transport and precision positioning of bulky and heavy items lies in the difficulty of correctly positioning the transported object relative to a fixed structure. The high inertia of the item determines, in fact, an equally high difficulty in placing the item in the correct position, with very small tolerances, with respect to a Cartesian reference system.

A first object of the invention is, therefore, to provide a solution to the problem of how to transport and position with high precision bulky and heavy items.

Another object of the invention is to provide a self-propelled machine for the transport and precision assembly of bulky items, which does not present the drawbacks of the prior art.

A further object of the invention is to provide a machine of the aforesaid type, which can be used for the safe transport and precision assembly of bulky and heavy items within industrial facilities, avoiding damage to the transported items as well as to the surrounding structures and machinery.

Not least object of the invention is to provide a self-propelled machine for the transport and precision assembly of bulky objects, which can be industrially produced at advantageous costs and therefore lends itself to large-scale production.

These and other objects of the invention are achieved by the self-propelled machine for the transport and precision assembly of bulky items, as claimed in the appended claims. The claims form an integral part of the technical teaching provided herein in connection with the invention.

### Disclosure of the invention

The self-propelled machine for the transport and precision assembly of bulky items according to the invention is adapted to transport and position, mainly in order to attain precision assembly, bulky items such as, for example, door leafs in industrial facilities. The machine according to the invention generally comprises a chassis structure, in which a chassis lower portion and a chassis upper portion are defined. Both portions, when viewed from above, preferably have a "U"-like shape. Other shapes, for example "C"-like or "L"-like shapes are, however, possible.

Advantageously, the lower portion of the chassis structure is supported by steering carriages equipped with wheels, for allowing transfer of the machine on a support plane, typically the flooring of an industrial facility. The flooring on which the machine works is usually leveled with extreme precision and does not include height irregularities, cracks or steps. In these cases the wheels of the carriages preferably have a metal structure limiting deformation thereof and have a coating of rubber or similar material, in order to preserve the flooring on which the machine works. Substantially non-deformable, entirely metallic wheels, i.e. wheels having no rubber parts or the like, or tires, could, however, be applied to the machine according to the invention, in particular environments, where environmental conditions make it necessary to do so. In other embodiments, the machine can be configured to operate on uneven or bumpy terrains and it will therefore be possible to provide that the wheels of the carriages supporting the chassis structure are provided with tires or that other shock-absorbing elements made of rubber or similar material are provided.

Advantageously, according to the invention, all the carriages are steering and motor-driven carriages, and each of said carriages has pairs of motor-driven independent wheels, i.e. wheels that are each provided with its own independent motor. In other embodiments, the carriages may comprise a single wheel, or have two or more wheels, all motor-driven, or only some of them being motor-driven wheels and the remaining ones being idle wheels. In still other embodiments, the carriages may be provided with two or more wheels driven by the same motor. In other embodiments, it will be possible to provide that only some of the carriages are equipped with one or more motor-driven wheels and that other carriages are equipped with idle wheels. According to a preferred embodiment of the invention, the motors of the wheels mounted on the carriages are hydraulic motors connected to a hydraulic branched circuit supplying the various machine utilities and receiving pressurized fluid from a power unit through a control assembly having hydraulic valves controlled by a programmable control unit. In other embodiments, electric motors can be provided, driving the wheels of the carriages and connected to an electric circuit receiving current from a power unit through a control assembly provided with switches, for example relays, controlled by said programmable electronic control unit.

The carriages of the machine are rotatably associated to the chassis structure by means of steering assemblies comprising a motor-driven slewing ring, operated by a motor, preferably a hydraulic motor. In other embodiments, it is also possible to provide an idly rotating slewing ring, attached to the corresponding carriage, and an actuator, attached to the chassis structure and arranged tangentially relative to the slewing ring in order to cause rotation of the slewing ring. According to a preferred embodiment of the invention, the actuator includes a double-effect hydraulic cylinder connected to said hydraulic circuit of the machine, which hydraulic circuit supplies the various hydraulic utilities. In other embodiments, the actuator includes an electric cylinder connected to said electric circuit of the machine, which electric circuit supplies the various electric utilities.

In addition, the chassis structure preferably defines a pair of lateral frames lying on parallel planes, said lateral frames being separated from each other by a central compartment adapted to receive therein the item to be transported. Said lateral frames include outer faces substantially defining the lateral sides of the machine.

The compartment defined between the lateral frames is inferiorly, superiorly and frontally open, in order to allow an item to be transported to enter said compartment, and it is further laterally delimited by the lateral frames of the chassis structure. In the event of particularly high loads, it may be necessary to configure the structure in a different manner, for example by providing it with reinforcing beams.

The compartment is transversely crossed by a pair of lift and support belts or bands associated with hydraulic or electric tensioning assemblies connected to the chassis structure and arranged to tension and release said support bands.

The machine according to the invention further comprises a plurality of lateral and rear stabilizers associated with the chassis structure and hydraulically or electrically driven by corresponding driving assemblies, said stabilizers being adapted to continuously assume a retracted or rest configuration and an advanced or supporting configuration conferring stabilization to the transported item.

Preferably, within the compartment adapted to receive the item to be transported, there are preferably provided eight lateral stabilizers, four of them being associated to a left lateral frame and four to the opposite, right lateral frame. For each lateral frame, the four stabilizers are located substantially at the four corners of the frame laterally delimiting the compartment. In addition, two rear stabilizers are provided within the compartment, one associated to the lower portion of the chassis structure and one associated to the upper portion. Said rear stabilizers are preferably arranged vertically aligned to each other and substantially at the center of the compartment. In other embodiments, it will be possible to provide substantially any number of said stabilizers and, furthermore, there can be a different number of said stabilizers for each side of the machine.

As mentioned above, the machine according to the invention further comprises a programmable electronic control unit and at least one sensor capable of generating an electric signal in which at least one parameter is a function of the position of the machine and, consequently, of the transported item relative to a reference system which is stationary relative to the pavement on which the machine is working. Said signal is processed by the control unit for controlling the driving assemblies enabling handling of the machine and positioning of the item transported within the compartment. Preferably, said signal is processed for controlling opening and closing of the valves of the valve assembly of the hydraulic circuit supplying the hydraulic utilities of the machine, or the opening and closing of the electric circuit supplying the electric utilities.

Preferably, the machine further comprises a power unit feeding the motor-driven steering carriages of the machine, preferably through a valve assembly controlled by the control unit. Said power unit preferably supplies in particular the actuators of the steering assemblies, the tensioning assemblies, the stabilizers, and the motors of the wheels.

According to the invention, the lower portion and the upper portion of the chassis comprise each a pair of parallel rectilinear beams defining the lower side and the upper side of the lateral frames, respectively. The lateral frames further comprise each a pair of parallel rectilinear uprights or columns, arranged at opposite ends of the beams of the chassis lower and upper portion.

Advantageously, the chassis structure further comprises a chassis rear portion rearwardly closing the compartment intended for housing the item to be transported, said chassis rear portion supporting a casing or cabinet housing the power unit, the electronic unit, the valve assembly and/or the electric circuitry connected to any electric utilities of the machine. Said chassis rear portion includes a pair of "C"-shaped elements, a lower one and an upper one, which define, together with the beams of the lower and upper portions of the chassis, the "U"-like shape of the lower and upper portions of the chassis.

Preferably, the chassis structure comprises a plurality of box-like rectilinear elements made of metal, preferably steel or steel alloy, said elements being provided, at least at one of their opposite ends, with a connecting flange. Said box-like elements are firmly connected to one another by means of bolts passing through a pair of adjacent flanges provided on respective box-like elements. In other embodiments, it is possible to provide that said elements are mutually joined by welding. The chassis structure may also be made as a welded single piece, which in practice avoids flanged connections.

Advantageously, according to a preferred embodiment of the invention, the plurality of lateral stabilizers comprises pairs of stabilizers arranged facing each other in each pair and arranged to come to rest, on opposite faces, against the surface of the item to be transported. The stabilizers comprise a telescopically sliding element equipped frontally, i.e. at its front end, with a pusher or pushing block, preferably having a pad made of rubber or similar material, for exerting a supporting thrust onto a surface of the transported item. Preferably, said block is hinged to the front end of the sliding element, at a hinge pin, in order to be able to adapt to the orientation of the surface of the item to be transported.

Preferably, the sliding element is further actuated by a double-effect hydraulic cylinder, housed within the sliding element. In each pair of stabilizers, the axis of the sliding elements are axially aligned, i.e. the sliding elements can translationally move along a common axis between the two stabilizers of each pair, so as to prevent torques from being generated onto the transported item.

Preferably, the lateral stabilizers comprise an element that can slide relative to corresponding openings provided in the chassis structure. Therefore, according to this preferred embodiment of the invention, the sliding element transversely crosses the corresponding element of the chassis structure to which said sliding element is associated.

For each support band, two tensioning assemblies are preferably provided, each comprising a double-effect hydraulic cylinder and a pair of idler rollers or pulleys. As an alternative, it is possible to provide, instead of hydraulic cylinders, electric actuators or other solutions including, for example, special equipment such as winches or hoist gears. The hydraulic cylinders, or the electric actuators where provided, are preferably vertically attached to the uprights of the chassis structure and the pair of rollers is rotatably attached to the top of the corresponding upright, on the upper portion of the chassis structure. The rollers are preferably attached with their rotation axes parallel and arranged longitudinally relative to the machine, i.e. parallel to the lateral frames and to the sliding axis of the sliding elements of the rear stabilizers. The rollers of each pair are also distanced relative to each other so that, for each band, an ascending portion is defined on the outer side of the machine and a descending portion is defined on the inner side of the machine. A safety buckle is also preferably provided between the rollers, said buckle preventing a block, provided on the descending portion of the band, from being thrown outside the structure, in the event that a band should become cut off downstream of the block. A suitable groove provided in each roller prevents the band from slipping off the roller during the tensioning and releasing operations.

According to a preferred embodiment of the invention, each band further comprises a central portion or girth, preferably having a width larger than that of the adjacent band portions and connected to the band by means of a pair of blocks. The girth, i.e. the central portion of the band, can be single or double, depending on the overall weight of the item to be lifted. A joint element or block, which can be either welded or bolted, is also preferably provided between the central portion and the adjacent portions of the band.

Still according to a preferred embodiment of the invention, the steering carriages, besides being preferably motor-driven, are also preferably provided with a leveling assembly capable of varying the height of the chassis structure above ground, i.e. the height above the support plane for the wheels, on which the machine is working. Preferably, the leveling assembly is a hydraulically operated assembly having at least one vertical hydraulic cylinder, preferably arranged between the axis of the wheels of the carriage and the slewing ring of the steering assembly.

Advantageously, the configuration of the chassis structure of the machine and the provision of bands for lifting and supporting the item to be transported allow positioning of the item with its lower surface at a few centimeters from the ground, i.e. from the flooring on which the machine is working, this being a result that could not be attained with conventional machines, such as fork lifts, due to the great thickness of the forks.

The machine according to the invention is also advantageously equipped with an electronically-assisted guiding and positioning system. Said guiding system is adapted to control mainly the advancement of the machine by means of the motor-driven carriages, the steering assemblies controlling steering of the carriages, the leveling assemblies and the tensioning assemblies. Preferably, the guiding system is configured for controlling said carriages and assemblies autonomously, i.e. in such a way that each carriage and assembly can take a configuration independent of the one taken by the other carriages and assemblies.

The machine can pick up, handle and position a large-sized item with millimeter precision and to this aim it is preferably equipped with a set of electric and/or electronic sensors or measuring instruments, which cooperate with an assisted guiding system, to enable the machine to pick up, grip and transport the item from the pick-up area to the target area and to effect final positioning of the item.

According to the invention, the assisted guiding essentially takes place in two main steps: a first step in which the item is approached and gripped, and a second step in which the item is transported and positioned.

The first, approaching step preferably takes place with the aid of at least one floor-mounted guide, for example a rail, arranged at a predetermined distance from the item, for allowing alignment and positioning of the machine for gripping. To this aim, the machine may advantageously be provided with encoders having an oscillating arm and cooperating with said at least one guide. Preferably, there are at least two encoders with oscillating arms and they are associated to separate steering carriages. When the machine is in the proximity of the floor-mounted guide, the oscillating arm of the encoder, by means of a suitable adapter, is positioned onto the corresponding guide. By means of a selector, the operator activates the approaching guidance mode.

Now, the electronic control unit, for example a PLC, detects and processes the signal coming from the encoder in order to automatically control steering of the carriages of the machine and align the machine to the desired direction. According to the invention, in this step, the operator preferably only needs to maintain the machine advancing command active. When the oscillating arm is in the proximity of rail fixed to the ground, the operator manually place, onto the guide, the adapter mounted on the arm. The assisted guiding system, by virtue of the alignment detected by the two encoders, will be able to position the machine in the optimal position for gripping the item.

When the machine is in its correct gripping position, the operator deactivates the approach guidance mode by means of the corresponding selector and brings the oscillating arms of the encoders back to their standby position.

The whole detection electronics required for reading the position of the item is arranged on the item itself by means of a suitable holder. The aim is to monitor all the movements of the item and transmit, to the PLC, the information required for effecting suitable corrections relative to one or more Cartesian axes.

Since the final position of the item may require multiple alignments on a single point of a vertical, the machine is preferably equipped with two inclinometers, which can be activated by means of a selector and detect any inclination of the item during handling thereof and communicate it to the PLC, which automatically acts onto the leveling assemblies associated with the carriages to bring the item back to level with the floor.

When the object is approaching its final position, i.e. it has almost reached its final position, the operator can proceed with the final positioning by activating an automated procedure in two consecutive steps.

The first step is to use a distance and steering angle measurement system in order to position the machine and the item transported thereby in alignment with the final position during approaching.

One of these measurement systems consists of a wire position sensor (Encoder) for measuring linear movement by means of a highly flexible steel wire that is wounds around a drum coupled to a potentiometer or an encoder. The wire sensor is advantageously mounted on a rotary pin, equipped with two proximity sensors with linear reading, which identify the steering degree of the item with respect to the final destination. For distance measurement, the encoder wire is unwound in the direction of the final positioning, its tip being fixed by means of a special clamp. The operator activates the wire-assisted guiding system with the appropriate selector and commands the machine to advance.

The PLC, processing the signals received from the wire encoder and from the two proximity sensors, automatically controls the degree of steering to be applied to the machine as this approaches its final positioning.

At a predetermined distance from the final position, obtained through the wire position sensor, the machine stops in order to proceed with the change of guidance mode. This stop coincides with the initial conditions to proceed with guidance through optical viewer. The operator disengages the guide wire and corresponding clamp and activates the camera-assisted guidance mode.

The camera-assisted guidance consists in using an optical viewer arranged on the transported item and a light pointing system identifying the final positioning point.

In detail, an electronic device provides the operator with a reference in the form of a light cross, which identifies the precise positioning point, while a camera, equipped with a monitor, indicates where the reference point of the item being transported is with respect to the center of the light cross. The PLC, transforming the position of the two points into coordinates, automatically controls steering of the machine to ensure that, with the advancement signal, the reference point of the object overlaps with the final positioning point.

Advantageously, according to the invention, the provision of an inferiorly free compartment and the provision of lift bands for the item to be transported, determines the possibility of placing the object at very little distance from the ground, preferably a few millimeters from the ground and, even more preferably, at a distance of less than 20 mm from the ground. This feature is of particular advantage for picking up and transporting doors and other items that are or have to be placed almost at floor level, i.e. a few millimeters therefrom. The thickness of the lift bands is, in fact, generally between 6 and 8 mm for double-layered bands and twice as much in the case of quadruple-layer bands. The number of layers of the bands depends on the required load capacity. By way of example, a forklift truck with high capacity, for example of 6000 kg/each, generally has metal forks with a thickness of 80 mm, which therefore do not allow to reach the reduced distance from the ground obtainable, instead, with the bands used in the machine according to the invention.

From the above it is clear that the machine according to the invention allows considerable flexibility thanks also to the system for positioning system heavy and bulky items very close to the ground plane, or vice versa for lifting them when having a reduced space below them.

### List of Drawings

Further features and advantages of the self-propelled machine according to the invention will become more apparent from the ensuing description of some preferred embodiments of the invention, provided merely by way of non-limiting example with reference to the annexed drawings, in which:
- Fig.1 is a perspective view from above of the machine according to the invention;

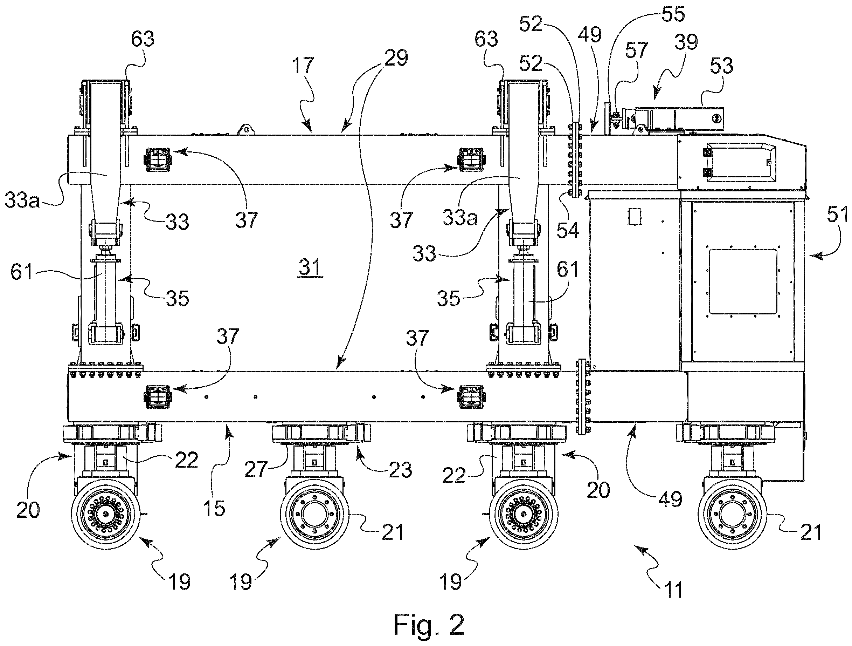

- Fig.2 is a side plan view of the machine of Fig. 1;

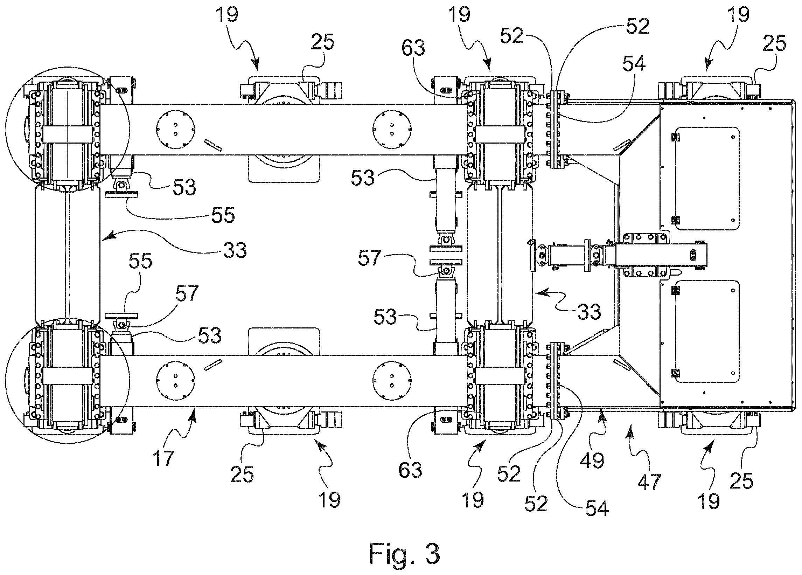

- Fig.3 is a top plan view of the machine of Fig.1;

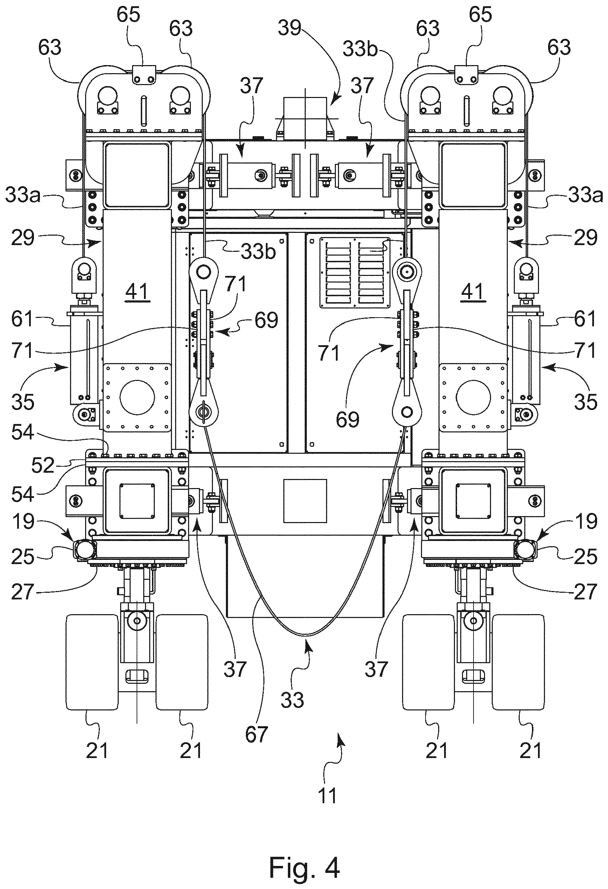

- Fig.4 is a front plan view of the machine of Fig.1;
- Fig.5 is a perspective view from above of the machine of Fig.1, provided with a position encoder;
- Fig.6 shows the position encoder mounted on the machine of Fig.5;
- Figs.7A and 7B are corresponding perspective views of the guiding device.

The same reference numerals have been used in all figures to identify the same or functionally equivalent components.

### Description of Some Preferred Embodiments

Referring to the annexed Figures, a machine 11 made according to a preferred embodiment of the invention is shown. The machine 11 is self-propelled and is adapted to transport and position, for precision assembly, bulky items such as, for example, door leafs in industrial facilities.

The machine 11 as shown comprises a chassis structure 13, in which a chassis lower portion 15 and a chassis upper portion 17 are defined. Both portions 15,17, when viewed from above, have a "U"-like shape.

The chassis lower portion 15 is supported by steering, motor-driven carriages 19 having each a pair of motor-driven wheels 21. In the illustrated embodiment, the wheels 21 are solid wheels made of steel and are both motor-driven, i.e. each wheel is equipped with a corresponding motor, preferably a hydraulic motor. In other embodiments, the carriages 19 may comprise a single wheel, or have two or more wheels, all motor-driven, or only some of them being motor-driven wheels and the remaining ones being idle wheels. In addition, still referring to the illustrated embodiment, all the carriages 19 are steering carriages and are equipped with motor-driven wheels 21. In other embodiments, however, it is possible to provide that only some of the carriages 19 are equipped with one or more motor-driven wheels 21 and that the remaining carriages are equipped with idle wheels. In the illustrated embodiment, for example the carriages are partly motor-driven and partly equipped with idle wheels. In particular, the first two front carriages 19 are motor-driven carriages, the subsequent carriages 19 are equipped with idle wheels, the carriages 19 in the third position are, again, motor-driven carriages, and the rear carriages 19 are, again, equipped with idle wheels. In this way, two motor-driven carriages and two carriages with idle wheels are provided on each side of the chassis structure 13, said motor-driven carriages and carriages with idle wheels being alternated with each other.

The carriages 19 are rotatably associated to the chassis structure 13 by means of steering assemblies 23 comprising, in the illustrated embodiment, a motor-driven slewing ring 27 driven by a motor 25 attached to the chassis structure 13 and arranged tangentially relative to the slewing ring 27 attached to the corresponding carriage 19.

In the illustrated embodiment, the steering carriages 19, besides being motor-driven, are also provided with a leveling assembly 20, capable of varying the height of the chassis structure 13 above ground, i.e. the height above the support plane for the wheels 21, on which the machine 11 is working. Preferably, the leveling assembly 20 is a hydraulically operated assembly having at least one vertical hydraulic cylinder 22, preferably arranged between the axis of the wheels 21 of the carriage 19 and the slewing ring 27 of the steering assembly 23.

The chassis structure 13 further defines a pair of lateral frames 29 lying on parallel planes, separated from each other by a central compartment 31 adapted to receive an item to be transported. The compartment 31 is inferiorly, superiorly and frontally open in order to allow an item to be transported to enter said compartment, and is further laterally delimited by the lateral frames 29 of the chassis structure 13.

The compartment 31 is transversely crossed by a pair of support bands 33 associated with hydraulic tensioning assemblies 35, connected to the chassis structure 13 and adapted to tension and release said support bands 33.

In the illustrated embodiment, the bands 33 employed have a thickness of about 8 mm, with a load capacity of about 16000 kg/each. The machine 11, as a whole, is configured for transporting items weighing several tens of tons, for example between 50 and 90 tons.

The machine 11 further comprises a plurality of lateral 37 and rear 39 stabilizers associated with the chassis structure 13 and hydraulically driven, said stabilizers being adapted to continuously assume a retracted or rest configuration and an advanced, supporting configuration conferring stabilization to the transported item.

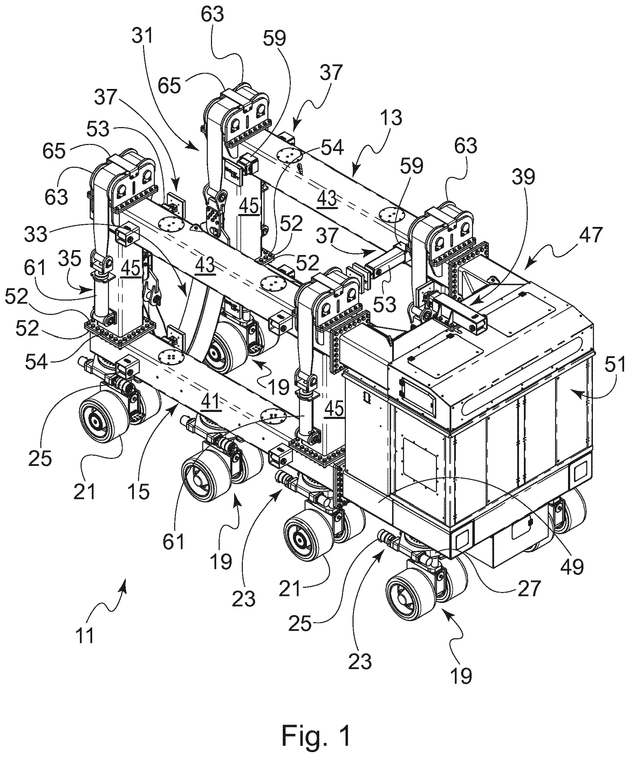

Referring in particular to Fig. 1, in the illustrated embodiment, the lateral stabilizers 37 arranged frontally on the machine 11 are in a retracted configuration and the lateral stabilizers 37 arranged rearwardly are in an advanced configuration. In the illustrated embodiment, in the compartment 31 there are provided eight lateral stabilizers in total, four of them being associated with a left lateral frame 29 and four with the opposite, right lateral frame 29. For each lateral frame 29, the four lateral stabilizers 37 are located substantially at the four corners of the frame 29 laterally delimiting the compartment 31. In addition, two rear stabilizers 39 are provided within the compartment 31, one associated with the lower portion 15 of the chassis structure 13 and one associated with the upper portion 17. Said rear stabilizers 39 are arranged vertically aligned to each other and substantially at the center of the compartment 31, at the center line of the compartment 31.

The machine 11 further comprises a programmable electronic control unit and at least one sensor capable of generating an electric signal in which at least one parameter is a function of the position of the machine 11 and, consequently, of the transported item relative to a reference stationary with respect to the flooring on which the machine 11 is working.

The machine 11 further comprises a power unit feeding, through a valve assembly controlled by the control unit, at least the leveling assemblies 20, the motors 25 of the steering assemblies 23, the tensioning assemblies 35, the stabilizers 37,39 and the motors of the wheels 21.

According to the invention, the chassis lower portion 15 and the chassis upper portion 17 comprise each a pair of parallel rectilinear beams 41,43 defining the lower side and the upper side of the lateral frames 29, respectively. The lateral frames 29 further comprise each a pair of parallel rectilinear uprights 45 arranged at opposite ends of the beams 41,43 of the chassis lower and upper portion.

The chassis structure 13 further comprises a chassis rear portion 47 supporting a casing 51 in which the power unit, the electronic unit and the valve assembly are housed. Said chassis rear portion 47 comprises a pair of "C"-shaped elements 49, namely a lower one and an upper one, which define, with the beams 41,43, the "U"-shape of the chassis lower portion 15 and the chassis upper portion 17. Said rear portion 47 further closes rearwardly the compartment 31 for the item to be transported.

In this illustrated embodiment, the chassis structure comprises a plurality of box-like rectilinear elements made of metal, preferably steel or steel alloy, said elements being provided, at least at one of their opposite ends, with a connecting flange 52. Said box-like elements are firmly connected to one another by means of bolts 54 passing through a pair of adjacent flanges 52 of respective box-like elements.

Still referring to the illustrated embodiment, the plurality of lateral stabilizers 37 comprises pairs of stabilizers facing each other in each pair and arranged to come to rest, on opposite faces, against the surface of the item to be transported.

The stabilizers 37,39 comprise a telescopically sliding element 53 equipped frontally, i.e. at its front free end, with a pusher or pushing block 55 for exerting a supporting thrust against a surface of the transported item. Preferably, said pusher block 55 is hinged to the front end of the sliding element 53, at a hinge pin 57, in order to be able to adapt to the orientation of the surface of the item to be transported.

The sliding element 53 is actuated by a double-effect hydraulic cylinder housed within said sliding element. The lateral stabilizers 37 of each pair are axially aligned, i.e. they comprise a corresponding sliding element 53 adapted to translationally move along a coincident axis between the two stabilizers 37 of each pair, so as to prevent torques from being generated onto the transported item, when the pusher block 55 is resting against the transported item.

In the illustrated embodiment, the lateral stabilizers 37 comprise an element 53 that can slide relative to corresponding openings 59 provided in the chassis structure 13. In this embodiment, therefore, said sliding element 53 passes through the box-like metal element defining the corresponding portion of the chassis structure 13.

Still referring to the illustrated embodiment, for each support band 33 there are provided two tensioning assemblies 35, each comprising a double-effect hydraulic cylinder 61 and a pair of idler rollers 63. The hydraulic cylinders 61 are vertically attached to the uprights 45 of the chassis structure 13 and the pair of rollers 63 are rotatably attached, at the top of the corresponding uprights 45, to the upper portion 17 of the chassis structure 13. The rollers 63 are arranged with their rotation axes parallel and longitudinally oriented relative to the machine 11, i.e. in parallel to the lateral frames 29 and to the sliding axis of the sliding elements of the rear stabilizers 39.

The rollers 63 are preferably arranged with their rotation axes parallel and longitudinally oriented relative to the machine 11, i.e. in parallel to the lateral frames 29 and to the sliding axis of the sliding elements of the rear stabilizers 39. The rollers 63 of each pair are also distanced relative to each other so that, for each band 33, an ascending portion 33a is defined on the outer side of the machine 11 and a descending portion 33b is defined on the inner side of the frames 29. A safety buckle 65 is also preferably provided between the rollers 63, said buckle preventing a block 69, provided on the descending portion of the band, from being thrown outside the structure, in the event that a band should become cut off downstream of the block 69.

Each band 33 further comprises a central portion or girth 67, obtained by arranging side-by-side a pair of bands ad having a width larger than that of the ascending portion 33a and descending portion 33b. Between the central portion and the adjacent portions of the band, there is also preferably provided a pair of blocks 69 comprising plates 71 bolted to each other and engaged in the ends of the corresponding portions of the band 33.

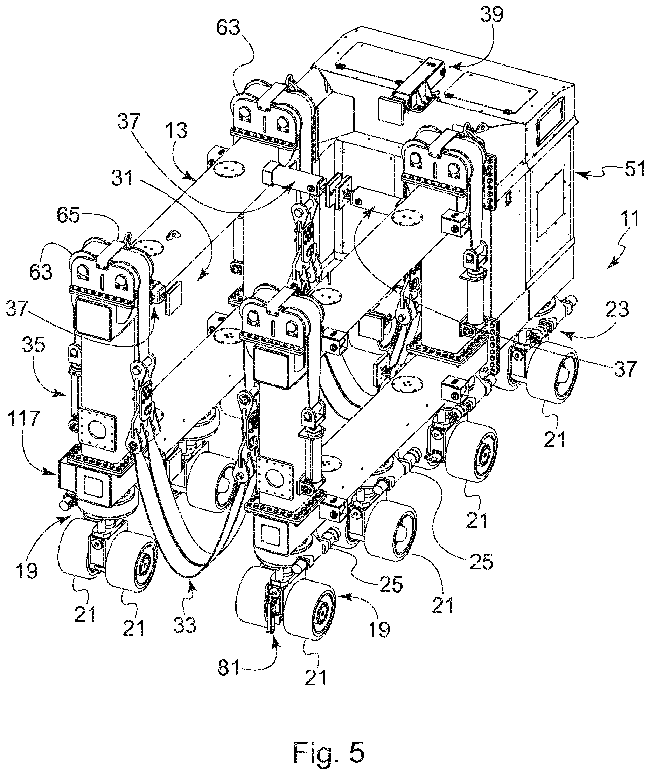

Referring to Fig. 5, this shows a machine 11 equipped with a position sensor or encoder 81. The encoder 81 is connected to one of the front carriages 19 of the machine 11. A second encoder 81, substantially identical to the first one, is preferably advantageously associated with a second carriage 19, for example the carriage 19 provided rearwardly on the same side of the machine 11 at the opposite end relative to the first encoder 81.

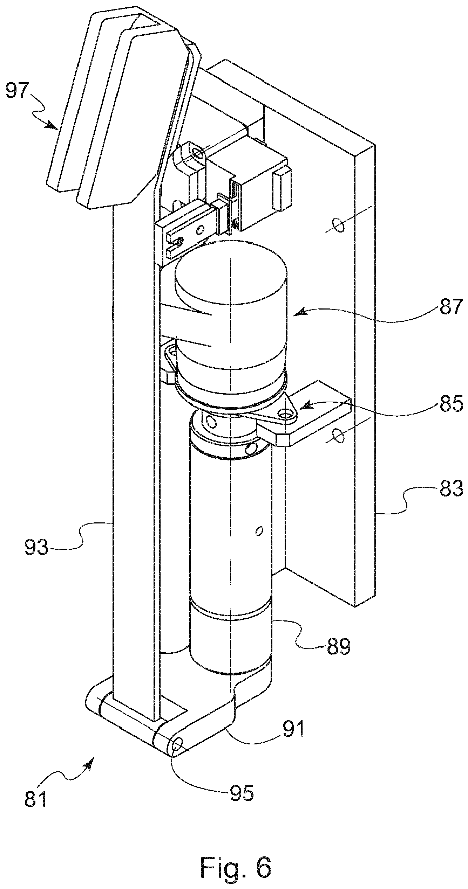

As can be better seen in Fig.6, the encoder 81 mainly comprises a support base 83 to which a sensor 87 connected to a rotatable column 89 is fixed by means of a flange 85. The column 89 carries, at its lower part, a fork 91 to which an oscillating arm 93 is hinged. The oscillating arm 93 is also provided, at the opposite end relative to the hinge pin 95, with an adapter 97 having an elongated shape and a "U"-shaped cross section. The adapter 97 is advantageously adapted to cooperate with a floor-mounted guide, for example a rail, and signals, through the sensor 87, any misalignment of the machine 11 relative to the guide, and determines, through the electronic control unit, a corresponding adjustment of the steering angle of the carriages 19.

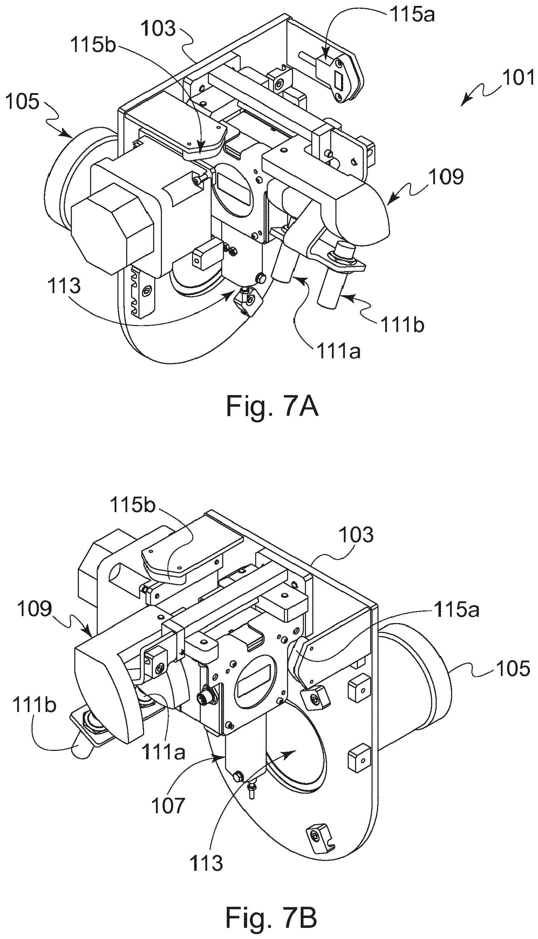

Referring to Figs. 7A and 7B, these show a guiding device 101 comprising, in the illustrated embodiment, a support base 103 integral to a column 105. The column 105 is adapted to be firmly associated with the machine 11, or, more preferably, to the item to be transported. For example, when said item is a large-sized industrial door equipped with hinges, said column can advantageously be placed in the hinge for the hinge pin. A wire guide approaching apparatus 107 and a support 109 for a pair of proximity sensors 111a,111b, for example of the induction type, are firmly attached to the base 103. A camera 113 housed in the hollow column 105 and a pair of inclinometers 115a, 115b are also attached to the base 103. The camera 113 is capable of "seeing", through a viewer pointed towards the base of the column 105 and extending in a distal position with respect to the base 103, a fixed reference located at the position to be reached by the item transported by the machine 11. For example, if the item is an industrial door equipped with hinges, and the camera 113, positioned in the column 105, is consequently located inside one of the hinges of the door, the fixed reference will advantageously be located at the center of the hinge provided on the structure to which the door is to be applied.

The guiding device 101 is capable of controlling the advancement of the machine 11 by means of the motor-driven carriages 19, the steering assemblies 23, the leveling assemblies 20 and the tensioning assemblies 35.

According to the invention, the machine 11 is provided with assisted guide for the steps of gripping and positioning of the item. In the machine 11 as illustrated, the assisted guide takes place in two main steps: a first step in which the item is approached and gripped, and a second step in which the item is transported and positioned.

The first, approaching step preferably takes place with the aid of floor-mounted guides, for example made as rails recessed in the floor. The rails are arranged at a predetermined distance from the item, for allowing alignment and positioning of the machine for gripping. The encoders 81 equipped with the oscillating arm 93 cooperate with the corresponding rail by means of the adapter 97 and sends, to the electronic control unit, a signal indicative of the angular position of the rotatable column 89 of the sensor 87. By means of a suitable selector, the operator activates the guidance mode for approaching the item to be transported. The electronic control unit, upon receiving the aforesaid signal from the encoders 81, can actuate in particular the steering assemblies 23 and possibly other drives of the machine 11. The advancement command for the motors of the wheels 21 of the carriages 19 for bringing the machine 11 to the desired position optimal for gripping the item will, instead, be preferably actuated manually by an operator.

When the machine 11 is in its correct position for gripping, the operator deactivates the approaching guidance by means of the corresponding selector and positions the oscillating arms of the encoders 81 back to the standby position.

Now, the item can be picked up and loaded into the compartment 31 of the machine 11, where it is secured by means of support bands 33 and the lateral 37 and rear 39 stabilizers 37.

The electronics required for reading the correct position of the item and consisting of the guiding device 101, is preferably arranged on the item itself by means of the column 105. The aim of the device 101 is to monitor all the movements of the item during travel of the machine 11 approaching its final destination, and to transmit, to the electronic control unit, the information required for effecting suitable travel corrections relative to one or more Cartesian axes.

The guiding device 101, when it is not fixed to the transported item, can be received in a suitable casing 117 provided on the machine 11. The guiding device 101 can be of the wireless type, communicating with the machine 11 by means of radio waves, of the wired type, i.e. connected to the machine 11 and to the electronic control unit installed thereon by means of conductor wires.

In order to attain precision positioning, the machine 11 is provided with two inclinometers 115a,115b, preferably actuatable by means of a selector, said inclinometers detecting any inclination of the transported item during handling relative to corresponding reference axes and communicating said inclination to the electronic control unit, which acts automatically onto the leveling assemblies associated to the carriages in order to bring the item back to level relative to the two reference axes.

When the transported item is close to the final approaching step, i.e. it has almost reached its final position, the operator can proceed to the final positioning by activating an automated procedure in two subsequent steps.

The first step consists in using a distance and steering angle measurement system in order to position the machine and the item transported thereby in alignment with the final position during approaching.

The system employed by the machine 11 consists of a wire position sensor (Encoder) for measuring linear movement by means of a highly flexible steel wire that is wounds around a drum coupled to a potentiometer or an encoder. The wire sensor is advantageously mounted on a rotary pin, equipped with two proximity sensors 111a, 111b with linear reading, which identify the steering degree of the item with respect to the final destination. For distance measurement, the encoder wire is unwound in the direction of the final positioning, its tip being fixed by means of a special clamp. The operator activates the wire-assisted guidance system by means of the appropriate selector and commands the machine to advance.

The electronic control unit, processing the signals received from the wire encoder 107 and from the two proximity sensors 111a,111b, automatically controls the degree of steering to be applied to the machine 11 as this approaches its final position.

At a predetermined distance from the final position, obtained through the wire position sensor 107, the machine stops to proceed with the change of guidance mode. This stop coincides with the initial conditions to proceed with guidance through optical viewer. The operator disengages the guide wire of the sensor 107 and its corresponding clamp, and activates the guidance mode assisted by the camera 113.

The guidance mode assisted by the camera 113 consists in using an optical viewer arranged on the transported item and a light pointing system identifying the final positioning point.

More particularly, a reference in the form of a light cross identifying the exact positioning point is provided to the operator, while a camera 113, through a monitor, signals where the reference point of the transported item lies relative to the center of the light cross. The electronic control unit, by transforming into coordinates the position of the two points, automatically controls steering of the machine 11 so that, with the advancing signal, the reference point of the item overlaps the final positioning point. The operator, therefore, solely has to actuate the command in this final approaching step.

The invention as described and illustrated is susceptible to several variations and modifications falling within the same inventive principle.

## Claims

1. Self-propelled machine (11) for the transport and precision assembly of bulky items, comprising:
- a chassis structure (13), in which a chassis lower portion (15) and a chassis upper (17) are defined, both said portions being substantially U-shaped, the lower portion (15) being supported by steering carriages (19), at least some of which are motor-driven, said carriages being equipped with at least one idle or motor-driven wheel (21), said structure further defining a pair of parallel lateral frames (29) that are separated from each other by a central compartment (31) adapted to receive an item to be transported, said compartment being inferiorly, superiorly and frontally open in order to allow an item to be transported to enter said compartment, and laterally delimited by the lateral frames (29) of the chassis structure;
- a pair of support bands (33) transversely crossing said compartment (31) and associated to tensioning assemblies (35) controlled by an electronic control unit and connected to the chassis structure (13), said tensioning assemblies being adapted to tension and release said bands (33);
- a plurality of lateral (37) and rear (39) stabilizers associated to the chassis structure (13) and driven by driving assemblies, said stabilizers being adapted to continuously assume a retracted or rest configuration and an advanced, supporting configuration conferring stabilization to the item transported within the compartment (31);
- a programmable electronic control unit;
- at least one sensor capable of generating an electric signal in which at least one parameter is a function of the position of the machine (11) and, consequently, of the transported item relative to a reference stationary with respect to the pavement on which the machine (11) is working;
- a power unit feeding the motor-driven steering carriages (19).

2. Machine according to claim 1, wherein the chassis lower portion (15) and the chassis upper portion (17) comprise each a pair of parallel rectilinear beams (41,43) defining the lower side and the upper side of the lateral frames (29) and wherein the lateral frames further comprise each a pair of parallel rectilinear uprights (45) arranged at opposite ends of the beams (41,43) of the chassis lower and upper portion.

3. Machine according to claim 2, wherein the chassis structure (13) further comprises a chassis rear portion (47), said rear portion rearwardly closing the compartment (31) and supporting a casing (51) in which the power unit is housed.

4. Machine according to claim 1 or 2 or 3, wherein the chassis structure (13) comprises a plurality of box-like rectilinear elements made of metal, preferably steel or steel alloy, said elements being provided, at least at one of their opposite ends, with a connecting flange (52), and wherein said box-like elements are firmly connected to one another by means of bolts (54) passing through a pair of adjacent flanges (52) of respective box-like elements.

5. Machine according to any of the preceding claims, wherein the plurality of lateral stabilizers (37) comprises pairs of stabilizers facing each other in each pair and arranged to come to rest, on opposite faces, against the surface of the item to be transported.

6. Machine according to claim 5, wherein the lateral (37) and rear (39) stabilizers comprise a telescopically sliding element (53) equipped frontally, i.e. at its front free end, with a pusher or pushing block (55) for exerting a supporting thrust against a surface of the transported item, said sliding element (53) being actuated by a double-effect hydraulic cylinder or by an electric actuator.

7. Machine according to claim 6, wherein the lateral stabilizers (37) of each pair are axially aligned, i.e. they comprise a pusher (55) adapted to translationally move along a coincident axis between the two stabilizers of each pair, so as to prevent torques from being generated onto the transported item.

8. Machine according to claim 5 or 6 or 7, wherein the lateral stabilizers (37) can slide relative to corresponding openings (59) provided in the chassis structure (13).

9. Machine according to any of the preceding claims, wherein the tensioning assemblies (35) comprise a double-effect hydraulic cylinder (61) and at least one idler roller or pulley (63), the hydraulic cylinders being vertically attached to the uprights (45) and the pair of rollers (63) being attached, at the top of the upright, to the upper portion (17) of the chassis structure (13).

10. Machine according to any of the preceding claims, wherein at least one sensor is further provided adapted to generate an electric signal in which at least one parameter is a function of the position of the machine (11) and, consequently, of the transported item relative to a reference stationary with respect to the pavement on which the machine (11) is working, said signal being processed by the control unit for controlling the driving assemblies that allow movement and/or steering of the machine (11) and positioning of the transported item within the compartment, said sensor comprising an encoder (81) provided with a position sensor (87) and/or a wire position sensor (107).
